# EUROPEAN PATENT APPLICATION

(11) **EP 3 945 128 A1**
(43) Date of publication of application: **02.02.2022**
(21) Application number: 20187903.8
(22) Date of filing: 27.07.2020
(51) Int. Cl.: C12C 12/04, B01D 3/10, C12H 3/02

(54) **METHOD FOR CLEANING A PLANT FOR REDUCTION OF AN ALCOHOL CONTENT IN A BEVERAGE AND SUCH A PLANT WITH A CLEANING DEVICE**

(71) Applicant: Api Schmidt-Bretten Gmbh&co. Kg, 75015 Bretten (DE)
(72) Inventor: Gültlinger, Christoph, 75015 Bretten (DE)
(74) Representative: Mammel und Maser

(57) **Abstract**

The invention relates to a process for cleaning an plant as well as such an plant, wherein for cleaning the cleaning liquid is discharged via the spray heads (63, 65), and for rinsing the plant (10) a return line (84) of the cleaning device (60), which branches off at one end (83) of the cleaning main line (61), is controlled, through which the cleaning liquid is transferred into an outlet line (16) which opens into a collecting container (96). (See Figure 1)

## Description

The invention relates to a method for cleaning a plant for reducing an alcohol content in a beverage and a plant for reducing an alcohol content in a beverage with a cleaning device.

From DE 38 43 516 A1 such a plant for the production of reduced-alcohol beverages is known. This plant includes a rectification device. Vapours are separated by this rectification device. These vapours may include alcohol, fragrances and/or flavours. The alcohol is separated from the vapours. The condensed alcohol can be returned to the rectification device. A reduced-alcohol or dealcoholised beverage is discharged from the rectification device, cooled and fed to a collection container via an inoculation station. In this inoculation station carbonic acid can be added. This device comprises a closed circuit so that the vapours discharged in the rectifier are condensed and the condensat will be returned to the rectifier.

Such plants for reducing the alcohol content of the beverage require cleaning at regular intervals, as residues may accumulate in the plant. A cleaning device is provided for this purpose. This cleaning device comprises a main line from which a first branch line leads to a degasser in which at least one spray head is provided. In the cleaning main line, at least a second branch line branches off, which opens into a head area of the rectifier, in which at least one further spray head is positioned. For cleaning the plant, it is provided that cleaning liquid is taken from a collecting tank and fed to the spray heads via the cleaning main line and the respective branch lines arranged thereon. Subsequently, the plant is rinsed with water to remove the contaminated cleaning liquid. After the cleaning liquid has been completely removed, the plant for reducing the alcohol content of the beverage can be put back into operation.

Such a flushing process is associated with a considerable operating time, as the entire main cleaning line must be cleaned via the spur lines of the spray heads. In addition, cleaning processes for such plants require increased hygiene.

The invention is based on the task of enabling a process to increase the cleaning performance when cleaning a plant for reducing an alcohol content in a beverage. Furthermore, the invention is based on the task of proposing a plant for reducing an alcohol content in a beverage with a cleaning device by which the cleaning performance is increased.

This task is solved by a method in which, for flushing the plant, at least one return line of the cleaning device is activated, which branches off at one end of the cleaning main line after the last stub line and a proportion of the cleaning liquid is transferred out of the plant directly via the return line, preferably into an outlet line for the cleaning liquid. This method makes it possible that a considerable amount of cleaning liquid, which is in the cleaning main line leading to the branch lines, can be discharged via the return line within a short period of time. Thus, only a short flushing time is required to dispense the cleaning liquid in the branch lines via the spray heads. This allows a considerable reduction in the time required to flush the cleaning device in order to completely remove the cleaning liquid contained in the cleaning device. Advantageously, the outlet line for the cleaning liquid is the same line as the outlet line for the reduced-alcohol beverage, whereby, depending on the controlled process, a collecting tank for the reduced-alcohol beverage or a collecting tank for the used cleaning liquid and the rinsing liquid is connected to the outlet line.

Preferably, the cleaning liquid is supplied via at least a third stub line, which branches off from the main cleaning line, to at least one spray head arranged in the first vapour line. This first vapour line connects a separator with a rectifier, whereby the vapours are fed into a lower area of the rectifier. By this arrangement of the at least one spray head in the vapour line, the vapour line itself can also be cleaned.

Furthermore, the cleaning liquid is preferably fed via a fourth branch line branching off from the main cleaning line to at least one spray head which is arranged in a second vapour line. This second vapour line extends between the rectifier and a downstream condenser. This means that this vapour line can also be flooded with cleaning liquid and cleaned. Hygiene can be increased by additionally feeding the cleaning liquids into the vapour line.

Another advantageous design of the process is that in a rectification device consisting of an upper and a lower column, which are arranged spatially next to each other and not one above the other, a third vapour line connects the first and second columns with each other and the cleaning liquid is fed via a fifth branch line deviating from the main cleaning line to at least one spray head arranged in the third vapour line. In this way, the vapour line provided between the upper and lower column or the first and second column can also be wetted with cleaning liquid and cleaned.

Furthermore, preferably in a cleaning cycle, the spray heads are controlled consecutively for dispensing with cleaning liquid, the sequence for controlling the spray heads following the direction of flow of the vapours from the degasser to the condenser. This has the advantage that there is sufficient time for the cleaning liquid to act at the respective cleaning location before the cleaning liquid is lifted out. The advantage is that the cleaning liquid is lifted out or washed out by a rinsing liquid, in particular water.

The spray heads are advantageously activated with a working time for dispensing the cleaning fluid of less than ten seconds. This period is sufficient to allow sufficient wetting of the surrounding area with a cleaning fluid. At the same time, flooding of the cleaning fluid plant can be prevented.

After a period of exposure to the cleaning fluid, the plant is flushed with a flushing fluid, whereby in a first flushing step the main line and the return line are flushed and in a second flushing step the branch lines branching off the cleaning main line are flushed in the respective order in which the branch lines branch off the cleaning main line in succession. The flushing liquid is discharged successively via the respective spray heads.

Preferably, hydrogen peroxide is supplied between the first and second rinsing step when using lye as the cleaning fluid. This allows a further improvement of the cleaning effect to increase hygiene.

The task underlying the invention is further solved by a plant for reducing an alcohol content in a beverage with a cleaning device, in which a return line is provided, which branches off at the end of a cleaning main line to the last branch line and leads the cleaning liquid out of the plant. Preferably, the return line ends in an outlet line through which the reduced-alcohol beverage is discharged from the plant during operation of the plant and transferred to a collecting tank. Through this recirculation line, a short circuit can be created from the cleaning main line to the outlet line or a drain line leading out of the plant, which enables the cleaning main line to be flushed quickly. The cleaning liquid in the cleaning line is thus not discharged via the spray heads into the plant components and from there is discharged via the outlet line. Instead, this portion is flushed out via the return line. In this way, a considerable reduction in time can be achieved when lifting the cleaning liquid out of the plant. In particular, it is only necessary to discharge the cleaning fluid in the branch line via the spray heads and to flush the plant components.

A control valve is provided before the return line is fed into the branch line. This ensures that separate control during a cleaning process and a dealcoholization process is possible in the plant and the associated lines.

Advantageously, at least one spray head is provided in the vapour lines, which is connected to the cleaning main line via at least one branch line. Advantageously, when several spray heads are arranged in the vapour lines, only one branch line is provided which supplies the spray heads. Each branch line is preferably controllable with a valve in order to supply the cleaning liquid in a targeted manner.

Furthermore, it is preferably provided that the vapour line comprises a bend between an outlet and an inlet of two plant components. At least at the apex of the arc, the at least one spray head provided in the vapour line is positioned. This enables a section of the vapour line to be cleaned in and against the direction of flow of the vapours by the supply of the cleaning liquid at the apex of the arc. In this way, the area between a plant component, such as the separator, the degasser and/or the rectification column, and a vapour line connected to the outlet can also be cleaned up to the apex.

Advantageously, at least one further spray head is provided in a downpipe section of the vapour line. This means that this area of the downpipe section can also be additionally flooded with cleaning fluid for better hygiene.

The at least one spray head of the cleaning device can be designed as a ball spray head with a spraying angle of 360° and is preferably provided centrally to a cross-section of the vapour line. This allows an even distribution of the cleaning liquid on the inner wall of the vapour line. Alternatively, the spray head may be provided with a hemispherical spray angle and positioned adjacent to an inner wall section of the vapour line. Even with this alternative, an even wetting of the inner wall of the vapour line can be provided.

The invention as well as other advantageous designs and further developments of the same are described and explained in more detail below using the examples shown in the drawings. The features to be taken from the description and the drawings can be applied individually on their own or in any combination in accordance with the invention. It is shown:
Figure 1 is a schematic view of a plant for reducing an alcohol content in a beverage, and
Figure 2 is a schematic view of the plant shown in Figure 1 in an alternative design.

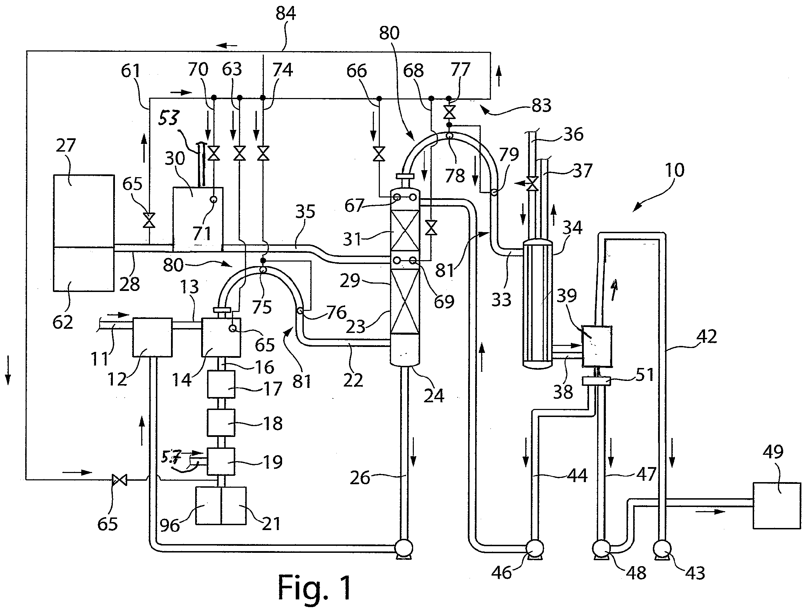

Figure 1 shows a schematic view of a plant 10 for the reduction of alcohol in a beverage. Steam with a temperature of, for example, 110 °C is fed via a pipe 11 to a heat exchanger 12, the first circuit of which, in which this heat exchanger 12 is integrated, is not shown in detail. In the second circuit of heat exchanger 12 a line 13 is provided which leads to a separator 14. From the bottom of the separator 14 a pipe 16 emerges, which discharges the non-alcoholic beverage. The non-alcoholic beverage is preferably wine, sparkling wine or beer. In the outlet line 16 there is a heat exchanger 17, which cools down the temperature of the finished product and serves the heat economy. In addition, outlet line 16 contains a cooler 18, which cools the finished product down to 5 °C, for example. Finally, an inoculation station 19 follows, to which flavouring substances such as CO2, fragrances and/or aromatic substances are fed, which are separated by fraction recovery from vapours of the alcoholic beverage. In the injection station 19 the fractional substances are discharged in doses into the outlet line 16 and mixed into the alcoholic beverage. Downstream of the inoculation station 19 there is a collecting container 21 for receiving the finished product, i.e. the reduced-alcohol beverage.

The term "reduced-alcohol beverage" also includes beverages in which the alcohol from the beverage is reduced to such an extent that these beverages are described as dealcoholised or alcohol-free and may in particular also contain 0.0% alcohol.

From the head of the separator 14, a first vapour line 22 leads the warm, non-separated vapours to a lower region of a rectifier 23. This rectifier 23 may have a second column or lower column 29. From the bottom 24 of the rectifier 23, a line 26 leads to the heat exchanger 12, thus closing this circuit in which the reduced-alcohol beverage is fed.

The alcoholic beverage is stored in a storage tank 27, which is to be reduced in alcohol content. From the storage tank 27 a line 28 leads to a degasser 30, in which fractional substances, especially CO2, are discharged via a line 53. These fractional substances can be fed to a fractional substance recovery device not shown. The fractional substances are fed to the inoculation station 19 via a line 57, which leads away from it. From the degasser 30, line 35 leads to the second circuit of plant 10. The alcoholic beverage is fed via line 35 to the middle section of the rectifier 23. This central region is located between an upper or first column 31 with a first packing and the second column 29 located below it. A second vapour line 33 is provided at the upper end region of the rectifier 23 or at the head 32 of the rectifier 23, which discharges the vapours containing alcohol, flavour and/or aromas. The temperature in head 32 is, for example, 30 °C. This corresponds to approximately 44 mbar. The temperature in the rectifier 23 above the bottom 24 is, for example, 39 °C at a pressure of, for example, 70 mbar.

In the steady state of rectifier 23, the second vapour line 33 discharges about 80 % of the alcohol, alcohol always being understood to be ethanol. The second vapour line 33 leads to a condenser 34, which is fed via a line 36 with coolant, in particular glycol. The coolant is discharged through one line 37. In the head of the condenser 34, the vapours fed to the condenser 34 may not yet condensed, which is why the vapours are fed to a separator 39 via a line 38. A vacuum line 42, which is connected to a vacuum pump 43 and which may in a first step also generates the vacuum present in the rectifier 23, leads into the head of the separator 39. From the bottom of the separator 39 there is a line 44 to a controller 51. A controller 51 determines the quantity ratio in lines 44 and 47 of the separator 39. The line 44 discharges the alcohol not required for return via a pump 48 to an alcohol tank 49, which carries at least liquefied alcohol in liquid form, for example with a concentration not exceeding 82 %. The percentage may be between 20 % and 80 % depending on the dealcoholisation effort. The liquefied alcohol is fed via a pump 46 to the head 32 of the rectifier 23, in particular at a level no higher than the outlet of the second vapour line 33 above the first column 31.

When the plant is started up, line 47 initially remains closed until the alcohol content in lines 44, 33 and 38 has reached the desired level, e.g. 80 %. A further increase in the alcohol content can be prevented by the controller 51 by releasing line 47, to the extent that it is ensured that it maintains the desired level on the alcohol percentage return path.

Plant 10 includes a cleaning device 60 by which cleaning is carried out at regular intervals or when the beverage to be reduced in alcohol content is changed. Cleaning in process (CIP) is preferred. The cleaning device 60 comprises at least one cleaning main line 61, which branches off from line 28, preferably upstream of degasser 30. During the cleaning process the main line 28 is not connected to the collecting tank 21, which contains the beverage for reduction in alcohol, but to a storage tank 62, which contains a cleaning liquid. The cleaning main line 61 extends along several components of plant 10, from which several branch lines branch off in succession. A first stub line 63 leads to at least one spray head 65 arranged in the separator 14. The stub line 63 is controlled by a valve 64. A second stub line 66 leads to at least one spray head 67 arranged in the rectifier 23.

Furthermore, this cleaning device 60 has a third stub line 74 which leads to one or more spray heads 75, 76 in the first vapour line 22. Furthermore, a fourth stub line 77 is preferably provided, which leads to at least one spray head 78, 79 in the second vapour line 33. The first and second vapour line 22, 33 preferably have an elbow 80 which covers a circumference of 180°. The spray heads 75, 78 are preferably provided in the respective vertex of the vapour line 22, 33. The further spray heads 76, 79 are preferably provided in the downpipe section 81 of the vapour lines 22, 33, so that an additional supply of the cleaning liquid is also possible in this area.

It is advantageous that a further or sixth stub line 68 can lead to at least one spray head 69 in a central region stub the rectifier 23, preferably between the first column 31 and the second column 29. Furthermore, a stub branch line 70 is provided which leads to at least one spray head 71 arranged in the degasser 30.

A return line 84 is provided at the end 83 of the main cleaning line 61, which opens into line 16 directly before the collecting tank 21. The return line 84 is fed to the outlet line between the inoculation station 19 and the collecting tank 21. During the cleaning process, the outlet line 16 ends in a collecting container 96 positioned for this purpose to collect the used cleaning liquid. Alternatively, the return line 84 can also end in a collecting container 96 directly separated from the outlet line 16.

The main line 61, the stub lines 63, 66, 68, 70, 74, 77 as well as the return line 84 are each controlled via controllable valves 64.

Furthermore, preferably one diameter of the main cleaning line 61 corresponds to the diameter of the stub lines 63, 66, 68, 70, 74, 77. It is also advantageously provided that the diameter of the main cleaning line 61 corresponds to the diameter of the return line 84.

The spray heads 65, 67, 71, 75, 76, 78, 79 can preferably be of the same design. Depending on their positioning in the respective component of the plant 10, they may also be designed differently and adapted accordingly. A spray head 75, 78 with a 360° spray angle is preferably provided in the first and second vapour line 22, 33. These spray heads 76, 78 are preferably arranged centrally in the vapour line 22, 33.

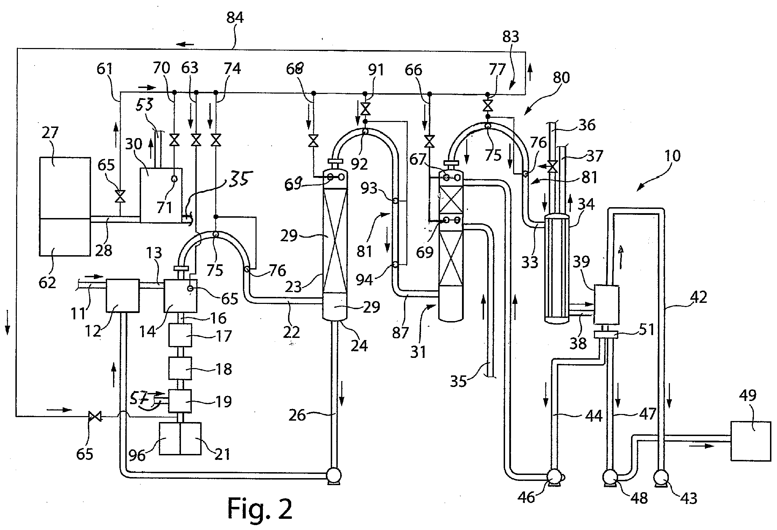

Figure 2 shows a schematic view of an plant 10 for alcohol reduction, which differs from plant 10 in Figure 1 only in the design of rectifier 23. In all other respects, this plant 10 is constructed in the same way as the plant 10 in Figure 1 in accordance with Figure 2, so that reference is made to it. The rectifier 23, like the first column 31 and the second column 29, is spatially separated and arranged side by side. Such an arrangement is used if the building in which the plant 10 is placed is of low height. A third vapour line 87 is provided between the first column 31 and the second column 29. This third vapour line 87 corresponds in structure to the first and second vapour lines 22, 23. A fifth stub line 91 branches off from the main cleaning line 61, which supplies at least one spray head 92, preferably several spray heads 92, 93, 94.

To carry out a cleaning of the plant 10, cleaning liquid is fed to line 28 through the storage tank 62. The valve 65 in the main cleaning line 61 is opened. The valve 65 in the return line 84 is opened first so that the main cleaning line 61, the branch lines as well as the return line 84 can fill with cleaning fluid. Then the valve 65 in the return line 84 is closed. Then the individual valves 65 in the branch lines are opened in a consecutive row in which the beverage or vapours are fed through the plant 10. Advantageously, it is planned that less than ten seconds of cleaning agent will be dispensed by each spray head. Subsequently, an exposure time in the form of a standstill in the cleaning process can be triggered, e.g. less than five minutes before the next dispensing cycle of the cleaning liquid is triggered. The exposure time can be used to improve the removal of contaminants in the components of plant 10 as well as in the respective lines.

A rinsing cycle with at least two rinsing steps is activated to discharge the cleaning liquid from plant 10:

In the first rinsing step, rinsing liquid is fed into line 28. The valves 65 in the stub lines 63, 66, 68, 70, 74, 77, 91 are closed. The valve 65 in the return line 84 is open, so that a rapid flushing of the main line 61 takes place while the cleaning liquid is pressed out via the return line 84. The used cleaning liquid or the rinsing water can be collected in the collecting tank 96. Subsequently, the valve 65 in the return line 84 is closed and a second flushing step is activated, and the branch lines are opened and closed one after the other in the order in which they are connected to the main cleaning line 61, so that only one stub line after the other is flushed. This has the advantage that this rinsing cycle can be run at constant pressure. After no more residual quantities of cleaning liquid are detected at the inlet of the collecting container 96, the operation of the plant can be restarted for the reduction of an alcohol content in a beverage.

## Claims

1. Method for cleaning a plant for reducing an alcohol content in a beverage,
- in which the plant (10) has at least one degasser (30), to which the alcohol-containing beverage is fed from a storage container (27) and via a line (35) the degassed alcohol-containing beverage is fed from the at least one degasser (30) of the rectifier (23) between a first and a second column (31, 29), and having a condenser (34) which is connected downstream of the rectifier (23) and to which vapours are fed from the rectifier (23) via a second vapour line (33), and with a line (26) branching off from the rectifier (23) at the bottom (24) and leading to a separator (14) which leads a reduced-alcohol beverage out of the plant (10) via an outlet line (16) or supplies it to a collecting tank (21), and the separator (14) is connected to the rectifier (23) via a first vapour line (22) which opens into a lower region of the rectifier (23), and
- in which the plant (10) with a cleaning device (60) comprises at least one cleaning main line (61), through which a cleaning liquid is supplied via at least one first stub line (63) to at least one spray head (65) arranged in the separator (14), and with a second stub line (66), through which the cleaning liquid is supplied to at least one spray head (67, 69) positioned in the rectifier (23), **characterized in that**,
- for cleaning the plant (10), the cleaning liquid is dispensed at least via the spray heads (63, 65), and
- for flushing the plant (10), at least one return line (84) of the cleaning device (60), which branches off at one end (83) of the cleaning main line (61), is actuated, through which the cleaning liquid is discharged from the cleaning main line (61).

2. Method according to claim 1, **characterized in that** the cleaning liquid is supplied via a stub line (74) branching off from the cleaning main line (61) to at least one spray head (75, 76) arranged in the first vapour line (22).

3. Method according to claim 1 or 2, **characterized in that** the cleaning liquid is supplied via a stub line (77) branching off from the cleaning main line (61) to at least one spray head (78, 79) arranged in the second vapour line (33).

4. Method according to one of the preceding claims, **characterized in that** the first and second columns (31, 29) of the rectifier (23) are arranged spatially adjacent to one another and are connected to one another by a third vapour line (87), and **in that** the cleaning liquid is supplied via a fifth stub line (91) branching off from the cleaning main line (61) to at least one spray head (92, 93, 94) arranged in the third vapour line (87).

5. Method according to one of the preceding claims, **characterized in that** the spray heads (65, 67, 69, 75, 76, 78, 79, 92, 93, 94) are successively controlled for dispensing with cleaning liquid, the sequence for controlling the spray heads following the direction of flow of the vapours in the plant (10).

6. Method according to claim 5, **characterized in that** the spray heads (65, 67, 69, 75, 76, 78, 79, 92, 93, 94) are driven with an operating time for dispensing the cleaning liquid of less than ten seconds.

7. Method according to one of the preceding claims, **characterized in that** after a period of action of the cleaning liquid the plant (10) is rinsed with a rinsing liquid, preferably water, whereby in a first rinsing step the main cleaning line (61) and the return line (84) are rinsed and in a second rinsing step the stub lines (63, 74, 66, 68, 77), which branch off successively from the cleaning main line (61), are rinsed with rinsing liquid.

8. Method according to claim 7, **characterized in that** a rinsing step with hydrogen peroxide is interposed between the first and the second rinsing step when using lye as cleaning liquid.

9. Plant for reducing an alcohol content in a beverage,
- with at least one degasser (30), to which the alcohol-containing beverage can be fed from a storage container (27), and with a line which, starting from the degasser (30), opens into the rectifier (23) between a first and a second column (31, 29), and with a condenser (34) which is connected downstream of the rectifier (23) and to which vapours can be fed from the rectifier (23) via a second vapour line (33), and with a line (26) branching off from the rectifier (23) at the bottom (24) and leading to a separator (14) which supplies a reduced-alcohol beverage via an outlet line (16) to a collecting container (21), and which is connected via a first vapour line (22) to the rectifier (23) which opens into a lower region of the rectifier (23), and
- with a cleaning device (60) comprising at least one cleaning main line (61) which supplies a cleaning liquid via at least one first stub line (63) to at least one spray head (65) arranged in the separator (14), and with a second stub line (66) which supplies the cleaning liquid to at least one spray head (67, 69) positioned in the rectifier (23),
**characterized in that**,
- the cleaning device (60) comprises a return line (84) which branches off at one end (83) of the main cleaning line (61), through which the cleaning liquid can be discharged from the plant (10) during a cleaning cycle.

10. Plant according to claim 9, **characterized in that** a control valve (65) is provided before the return line (84) is fed into an outlet line (16) leading into a collecting container (96).

11. Plant according to claim 9 or 10, **characterized in that** the first and second columns (31, 29) of the rectifier (23) are arranged spatially adjacent to one another and are connected to one another by a third vapour line (27), and **in that** the cleaning liquid is fed via a fifth stub line (91), which deviates from the cleaning main line (81), to at least one spray head (92, 93, 94) arranged in the third vapour line (87).

12. Plant according to one of claims 9 to 11, **characterised in that** at least one spray head (75, 76, 78, 79, 92, 93, 94) is provided in the vapour lines (22, 33, 87), which spray head is connected by a stub line (74, 77, 91) to the main cleaning line (61).

13. Plant according to one of claims 9 to 12, **characterized in that** the vapour line (22, 33, 87) comprises a semicircular arc (80) between an outlet and an inlet of two plant components and at least one spray head (65, 75, 92) is positioned in the apex of the arc (80).

14. Plant according to claims 9 to 13, **characterised in that** the vapour lines (22, 33, 87) have a downpipe section (81) which connects to the arc (80) and at least one spray head (76, 93, 94) is positioned in the downpipe section (81).

15. Plant according to one of claims 9 to 14, **characterized in that** the spray head (64, 67, 69, 71, 75, 76, 78, 79, 91, 93, 94) is designed as a ball spray head with a spray angle of 360° and is preferably positioned centrally with respect to the cross-section of the vapour line (22, 33, 87) is provided or that the spray head (64, 67, 69, 71, 75, 76, 78, 79, 91, 93, 94) has a hemispherical spray angle and is positioned on an inner wall portion of the vapour line (22, 33, 87).
